# EUROPÄISCHE PATENTSCHRIFT

(11) **EP 3 360 639 B1**
(45) Veröffentlichungstag und Bekanntmachung des Hinweises auf die Patenterteilung: **02.01.2019**
(21) Anmeldenummer: 17155919.8
(22) Anmeldetag: 13.02.2017
(51) Int. Cl.: B23K 26/08, B23K 26/38, B23K 26/142, B23K 103/00

(54) **VERFAHREN ZUR HERSTELLUNG VON PAPIER-, KARTON-, PAPPE- ODER WELLPAPPEZUSCHNITTEN UND VORRICHTUNG**
METHOD FOR MANUFACTURING PAPER, CARD, CARDBOARD OR CORRUGATED BOARD CUTS AND DEVICE
PROCÉDÉ DE FABRICATION DE DÉCOUPES EN CARTON ONDULÉ, EN PAPIER, EN CARTON GAUFRÉ ET DISPOSITIF

(43) Veröffentlichungstag der Anmeldung: 15.08.2018
(73) Patentinhaber: Panther Packaging GmbH & Co. KG, 25436 Tornesch (DE)
(72) Erfinder: HIBINGER, Frank, 25436 Tornesch (DE)
(74) Vertreter: Kossak, Sabine

(56) Entgegenhaltungen:
- EP-A1- 1 184 127
- EP-A1- 2 754 526
- WO-A1-2017/001301
- DE-A1-102011 103 979

## Beschreibung

Gegenstand der Erfindung ist ein Verfahren zur Herstellung von Zuschnitten aus Wellpappe. Weiterhin ist Gegenstand der Erfindung eine Vorrichtung zur Herstellung von Zuschnitten aus Wellpappe (siehe, zum Beispiel, EP 1 184 127 A1). Für den globalen Warenhandel werden Verpackungen in verschiedensten Größen und Formaten und aus verschiedenen Materialen benötigt. Die Verpackungen werden üblicherweise aus Zuschnitten aus Papier, Karton, Pappe, Wellpappe oder Kunststoff hergestellt. Beispielsweise werden Papierkuverts, Versandkartons, oder Versandverpackungen aus Wellpappe oder Pappe oder Kunststoffboxen eingesetzt. Zusätzlich besteht ein Bedarf für Displays oder Aufsteller für die Präsentation und Bewerbung von Waren. Displays oder Aufsteller werden ebenfalls aus Zuschnitten aus Papier, Karton, Pappe, Wellpappe oder Kunststoff hergestellt.
Die Herstellung der Verpackungen erfolgt konventionell so, dass zunächst eine endlose Materialbahn z.B. eine Wellpappenbahn oder Kartonrolle hergestellt wird und am Ende des Herstellungsverfahrens Platten bzw. Bogen geschnitten werden. Diese Platten oder Bogen werden gestapelt. Der Stapel wird nach Erreichen einer bestimmten Stückzahl oder bei Umschalten auf ein anderes Bogenformat oder eine andere Bedruckung abtransportiert.
Bei Wellpappenzuschnitten für Verpackungen oder Displays werden aus mehreren Papierbahnen unter der Verwendung von Stärkeleim, Dampf und anderen Hilfsmitteln auf einer Wellpappenerzeugungsanlage (WPA) Wellpappentafeln hergestellt. Diese Wellpappentafeln werden in Form von Stapeln aus der Wellpappenerzeugungsanlage herausgefördert und müssen bis zur weiteren Verarbeitung so lange lagern, bis keine Dimensionsveränderung der flächenhaften Abmessungen der erzeugten Wellpappentafeln mehr auftreten. Diese Dimensionsstabilität ist dann erreicht, wenn die Wellpappentafeln die Gleichgewichtsfeuchte mit der Umgebungsluft erreicht haben und die Wellpappentafeln auf die Umgebungstemperatur abgekühlt sind. In einem bzw. mehreren nachgeschalteten Prozessen werden die Wellpappentafeln ggf. bedruckt, gestanzt, gerillt, geklebt und zu Verpackungen verarbeitet.

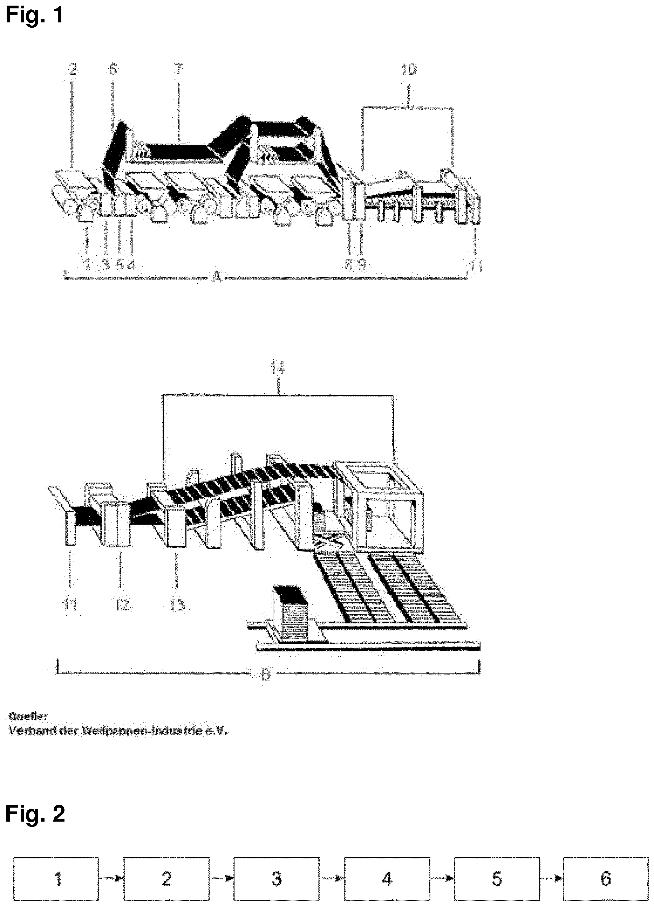

Figur 1 zeigt eine Vorrichtung zur Herstellung von Wellpappe gemäß dem Stand der Technik (Quelle: Verband der Wellpappe-Industrie e.V.). Die Wellpappenrohpapiere werden als Papierrollen zur Vorrichtung transportiert und in die Halterungen der Abrollständer 1 eingehängt. Die Abrollständer 1 sind mit Bremsen ausgestattet, so dass die Papiere unter ausreichender Spannung in nachfolgenden Maschinenaggregate einlaufen können.

Für die Produktion einer endlosen Wellpappenbahn sind jeweils 2 Abrollständer mit einem Splicer 2 verbunden. Sobald das Ende einer Papierrolle auf einem Abrollständer 1 erreicht ist, dient der Splicer 2 dazu, das Ende der Papierrolle mit dem Anfang einer neuen Papierrolle mittels eines doppelseitigen Klebebandes zu verbinden.

Das Papier läuft zunächst durch eine Vorheiz- und Befeuchtungseinrichtung 3,4. Im Wellenaggregat 5 wird das Wellenpapier durch zwei beheizte, zahnradartig ineinander greifende Riffelwalzen geführt, die die gewünschte Wellenform in das Papier prägen. Das Wellenpapier wird so lange zwischen den Riffelwalzen geführt, bis das Wellenpapier durch die Verklebung mit der Deckenbahn fixiert ist. Hierzu bestreicht das Leimauftragwerk mittels einer Auftragswalze die Wellenberge mit Stärkeleim. Wellenpapier- und Deckenpapier werden im Wellenaggregat zusammengeführt und weiter aufgeheizt, so dass der Stärkeleim geliert und somit für eine feste Verbindung zwischen Wellen- und Deckenpapier sorgt.

Der Hochtransport 6 fördert die einseitige Wellpappe auf die Brücke 7, die als Bahnspeicher dient und somit unterschiedliche Geschwindigkeiten zwischen den Einzelaggregaten ausgleichen kann. Da die einseitige Wellpappe noch biegeschlaff ist, kann sie in Form von Schlaufen auf der Brücke 7 bevorratet werden, um den Bahnspeicher auf einer möglichst kurzen Strecke der Anlage zu erhöhen.

In der Beklebemaschine 9, wird die einseitige Wellpappe, die über die Brücke 7 von der einseitigen Wellpappenmaschine herangeführt wird, mit einer zweiten Deckenbahn unter Zuhilfenahme von Stärkeleim zu einwelliger Wellpappe verklebt, wobei sowohl das Deckenpapier als auch die einseitige Wellpappenbahn über Vorheizzylinder 8 geführt und dabei bis kurz unterhalb des Gelierpunktes des eingesetzten Stärkeleims aufgeheizt werden.

In der Heiz- und Zugpartie 10 gleitet die Wellpappenbahn über beheizte Stahlplatten. Hier wird den Klebestellen und dem Papier die notwendige Wärme zugeführt. Gleichzeitig wird die überschüssige Feuchtigkeit entzogen, damit der Klebstoff geliert. Danach befördert ein Gurtsystem die Wellpappe zum Rill- und Schneideaggregat 12.

Im Rill- und Schneideaggregat 12 teilen rotierende Messer die noch endlose Wellpappenbahn in Laufrichtung in mehrere Bahnen in Maschinenlaufrichtung auf. Neben den Messern versehen laufende Rillkörper die Wellpappe mit Rillungen, die später beim Aufrichten der Verpackung das Umbiegen ermöglichen. Da die Welle quer zur Wellpappenbahn liegt, laufen Schnitte und Rillungen senkrecht zur Welle.

In einem zweiten Schneidevorgang teilt der rotierende Querschneider 13 die einzelnen Bahnen quer zur Maschinenlaufrichtung. So entsteht die endgültige Bogengröße. Die fertigen Wellpappenzuschnitte stauen sich nach dem Querschneiden schuppenartig auf einer oder mehreren Ablagen 14. Dort werden die zugeschnittenen Bogen vollautomatisch zu Wellpappenstapeln geformt.

Bei Kartonzuschnitten für z.B. Verpackungen erfolgt ebenfalls die Herstellung des Zuschnitts aus einem Bogen bzw. einer Tafel. Nachdem die Papier- oder Kartonbahn auf der Papier- oder Kartonmaschine zu einer Mutterrolle (Tambour) aufgerollt wurde, wird die Papier- bzw. Kartonrolle in einem nachgeschalteten Prozess mittels eines Querschneiders zu Tafeln geschnitten, die übereinander abgestapelt werden. Diese Stapel werden dann in einem bzw. mehreren nachgeschalteten Prozessen ggf. bedruckt, gestanzt, gerillt, geklebt und zu Verpackungen verarbeitet.

Es besteht ein Problem, die Platten bzw. Bogen kontinuierlich abzutransportieren, insbesondere wenn kleine Mengen einer Bogengröße für ein bestimmtes individuelles Zuschnittformat hergestellt werden. Wenn beispielsweise nur 10 Verpackungen einer Größe hergestellt werden sollen, stellt es ein erhebliches Problem dar, genau diese 10 Platten schnell genug abzutransportieren, so dass die Produktionsanlage z.B. die Wellpappenerzeugungsanlage nicht angehalten werden oder deren Produktionsgeschwindigkeit drastisch reduziert werden muss. Besonders bei der Wellpappenproduktion ist, bedingt durch die kontinuierliche Wellpappenproduktion, die Transportgeschwindigkeit der Materialbahn extrem hoch. Der Abtransport der gestapelten Bogen eines Formats und einer Größe muss sich entsprechend der Transportgeschwindigkeit der Wellpappenbahn bzw. Karton- oder Papierbahn anpassen. Ebenso verursacht der Transport sehr kleiner Stapel einen erheblichen logistischen Aufwand, da die Stapel nicht untereinander vermischt werden dürfen und somit einen großen flächenhaften Lagerplatzbedarf verursachen.

Ein weiteres Problem ist, dass die Wahl der Formen, die ausgestanzt werden können, durch die Form der Platten bzw. Bogen eingeschränkt ist. Auch bei optimaler Anordnung der Zuschnitte auf der Platte entstehen deshalb Abfallstücke. Manche Zuschnitte, die aus Stabilitäts- oder baulichen Gründen attraktiv wären, sind auf Grund der nicht optimalen Anordnungsmöglichkeiten auf der Platte nicht wirtschaftlich herstellbar. Die Stanzwerkzeuge, mit denen der Zuschnitt aus der Platte ausgeschnitten wird, sind zudem vergleichsweise teuer, da ein Stanzwerkzeug etwa 1.000,00 EUR kostet. Eine schnelle und einfache Variation der Stanzform ist daher nicht möglich.

WO 2013/164810 beschreibt ein dynamisches Multiscannersystem, das bei der Herstellung verschiedener Verpackungen aus Karton, Pappe, Wellpappe oder Kunststoff eingesetzt wird. Dabei werden Bogen des entsprechenden Materials mit Laserschneidern zugeschnitten. Die Formen auf den Bogen sind entsprechend freier wählbar und lassen sich leichter umschalten. Die Form des Zuschnitts wird durch eine Stempelrolle vorgeben, von der der Laser die auszuschneidende Form abliest. Dieses Verfahren erlaubt eine schneller und flexiblere Verarbeitung der Bogen, ist aber an einen ausreichend schnellen Antransport und Abtransport der zu verarbeitenden Bogen gebunden.

Aus der DE 10 2008 062 964 A1 ist ein Verfahren zur Herstellung von ein- oder mehrlagiger Wellpappe bekannt. Bei dem Verfahren werden zunächst herkömmlich Bogen hergestellt. Da Kaschieren, Besäumen und Rillen in einem Arbeitsgang ausgeführt werden, sind die Herstellungszeiten für die Zuschnitte verkürzt.

Aufgabe der Erfindung ist es, ein Verfahren zur Herstellung von Zuschnitten aus Wellpappe bereit zu stellen, mit dem die vorstehend beschriebenen Nachteile überwunden werden und insbesondere eine schnellere, kostengünstige und hinsichtlich der Form des hergestellten Zuschnitts flexiblere Herstellung für Zuschnitte aus Wellpappe bereitzustellen. Weiterhin soll das Verfahren in der Lage sein, Zuschnitte vom Einzel-exemplar, d.h. Stückzahl 1, bis zur Großserie wirtschaftlich zu produzieren.

Die Aufgabe wird erfindungsgemäß gelöst durch ein Verfahren gemäß Patentanspruch 1.

Weitere Ausführungsformen sind Gegenstand der Unteransprüche oder nachfolgend beschrieben.

Das erfindungsgemäße Verfahren zur Herstellung von Zuschnitten aus Wellpappe wird kontinuierlich aus der Materialbahn durchgeführt. Unter kontinuierlich wird dabei verfahrenstechnisch verstanden, dass eine kontinuierliche Materialzufuhr erfolgt und ohne absetzen oder stapeln Zuschnitte erzeugt werden.

Das erfindungsgemäße Verfahren umfasst die Schritte
- ggf. Bereitstellen einer Wellpappenbahn,
- Führung der Materialbahn in den Wirkungsbereich mindestens eines ersten Schneidwerkzeugs oder einer ersten Gruppe von Schneidwerkzeugen,
- Schneiden der Materialbahn mit mindestens einem formungebundenen, variablen Schneidwerkzeug, wobei mit dem Schneidwerkzeug erste Schnittlinien in die Materialbahn eingebracht werden, die die Kontur eines Zuschnitts, eines Abfallstücks oder Teile der Kontur eines Zuschnitts und/oder Abfallstücks in der Materialbahn ergeben, wobei das zu erwartende Schrumpfungsverhalten der noch nicht dimensionsstabilen Wellpappenbahn durch das formungebundene Schneidwerkzeug berücksichtigt und durch das Skalieren des geplanten Zuschnitts im Voraus berechnet und angepasst werden kann.

In einem Planungsschritt des erfindungsgemäßen Verfahrens plant eine Planungseinheit die Lage der Zuschnitte in der Materialbahn. Die Planungseinheit übermittelt die Informationen an die Steuerungseinheit, die die Schneidwerkzeuge und ggf. die Abfallentfernungselemente und Abtransporteinrichtungen basierend auf den Daten der Planungseinheit steuert. Optional bilden die Steuerungseinheit und die Planungseinheit eine Einheit.

In einer Ausführungsform erfolgt in einem weiteren Verfahrensschritt entweder das
- Abtransportieren der Zuschnitte und Entfernen der Abfallstücke aus der Materialbahn, oder
- das Entfernen der Abfallstücke aus der Materialbahn und das Abtransportieren der Zuschnitte.

Papier ist nach DIN 6735 ein flächiger, im Wesentlichen aus Fasern pflanzlicher Herkunft bestehender Werkstoff, der durch Entwässerung auf dem Sieb gebildet wird. Dabei entsteht Faserfilz, der anschließend verdichtet und getrocknet wird.

Unter Karton wird ein Papier mit einer flächenbezogene Masse von >150 g/m² verstanden.

Der nur in Deutschland gebräuchliche Begriff Pappe beschreibt ein Papier mit einer flächenbezogenen Masse >600 g/m². Der Begriff Pappe umfasst auch Vollpappe.

Unter Wellpappe wird eine Kombination mehrerer Lagen Papier verstanden, bei der eine oder mehrere Lagen eines gewellten Papiers zwischen mehrere Lagen eines anderen Papiers oder Kartons geklebt sind.

Als Wabenwellpappe, englisch Honeycomb, wird eine dreilagige Verbundkonstruktion in Sandwichbauweise bezeichnet, die aus tragenden Papierbahnen an den beiden Außenseiten und einem Stützkern aus wabenförmigem Papier im Innern besteht, die miteinander verklebt sind. Erfindungsgemäß kann Wabenwellpappe ebenso verwendet werden wie klassische Wellpappe.

Erfindungsgemäß ist die Materialbahn eine Wellpappenbahn. Die Dimension der Materialbahn ist erfindungsgemäß so bemessen, dass die Breite der Bahn vernachlässigbar gegenüber der Länge der Bahn ist, d.h. Längen-Breiten-Verhältnis anders als bei Materialbogen sehr groß ist. Die Materialbahn ist bevorzugt endlos, da z.B. einzelne Materialrollen z.B. Kartonrollen oder Papierrollen miteinander verbunden werden, z.B. verklebt werden, und so eine ununterbrochene, kontinuierliche, endlose Materialbahn entsteht. Die Materialbahn ist eine Wellpappenbahn, die direkt aus einer Wellpappenerzeugungsanlage in das erfindungsgemäße Verfahren eingespeist wird.

Erfindungsgemäß können verschiedene Bearbeitungswerkzeuge eingesetzt werden, die einen Verfahrensschritt teilweise oder vollständig durchführen. In einem Verfahrensschritt wird die Materialbahn entsprechend z.B. geschnitten, gerillt, geprägt oder bedruckt. Die Bearbeitungswerkzeuge sind entsprechend z.B. Schneidwerkzeuge, Rillwerkzeuge, Prägewerkzeuge oder Druckvorrichtungen oder Gruppen dieser Werkzeuge.

Die Materialbahn hat eine Oberseite und eine Unterseite. Die Unterseite liegt aufgrund der Schwerkraft auf den Führungs- oder Antriebselementen auf. Von der Oberseite aus erfolgen bevorzugt die Bearbeitungsschritte scheiden, rillen, prägen etc..

Bevorzugt ist das formungebundene, variable Schneidwerkzeug ein Laser oder ein Plasmaschneider, wobei das Verfahren bevorzugt ohne ein formgebundenes Stanzwerkzeug durchgeführt wird.

Die Materialbahn wird im erfindungsgemäßen Verfahren bevorzugt mittels einer Zuführungsvorrichtung bereitgestellt. Die Zufuhr erfolgt in einer Ausführung, in dem eine Materialbahn auf einem Abrollständer platziert wird, die bei Verwendung einer einzelnen Materialbahnrolle direkt zum ersten Bearbeitungsschritt transportiert wird. Bei Verwendung mehrerer Materialbahnrollen werden die Materialbahnen jeweils in einem Abrollständer platziert und sobald eine Materialbahn sich dem Ende nähert, wird eine weitere Materialbahn mittels einer Klebevorrichtung bzw. einem Splicer mit der ersten Materialbahn verbunden, so dass die Bahnzufuhr nicht unterbrochen wird. Die Zufuhr kann alternativ direkt aus dem Herstellungsverfahren der Materialbahn, z.B. einer Wellpappenerzeugungsanlage erfolgen.

Das erfindungsgemäße Verfahren umfasst in einer bevorzugten Ausführungsform weiterhin die Schritte:
- Aufbringen von Synchronisierungsmarkierungen auf die Materialbahn, wobei die Synchronisierungsmarkierungen vorder Führung zu mindestens einem Schneidwerkzeug oder durch das Schneidwerkzeug selbst aufgebracht werden,
- Erfassen der Synchronisierungsmarkierungen mit mindestens einer Sensoreinheit,
- Übertragen der Daten zur Position der Synchronisierungsmarkierungen von der Sensoreinheit an eine Steuerungseinheit,
- Steuerung des Schneidwerkzeugs durch die Steuerungseinheit basierend auf den übertragenen Daten, so dass das Schneidwerkzeug die Schnittlinien abhängig von der Position der Synchronisierungsmarkierungen in die Materialbahn schneidet.

Die Synchronisierungsmarkierungen werden bevorzugt durch Schneiden, Stanzen oder Drucken aufgesetzt. Alternativ werden sie zu Beginn des Schneidevorgangs in die Materialbahn geschnitten. Die Synchronisierungsmarkierungen müssen jeweils in X- und Y- Richtung der Materialbahn platziert werden, um eine genaue Ausrichtung des Schneidwerkzeugs über der Materialbahn zu erreichen. Die Y-Richtung entspricht der Bahnlaufrichtung, die X-Richtung ist quer zur Bahnlaufrichtung. Die Synchronisierungsmarkierungen werden bevorzugt nach dem Bereitstellen einer Materialbahn und vor der Führung zu einem Schneidwerkzeug aufgebracht. Alternativ werden die Synchronisierungsmarkierungen bereits vor dem Bereitstellen der Materialbahn z.B. im Preprint-Verfahren aufgebracht. Durch Erfassen der Synchronisierungsmarkierungen können die Schnittlinien an den geplanten Stellen aufgebracht werden, auch wenn eine Vielzahl unterschiedlicher Zuschnittsgeometrien in kurzer Folge und nebeneinander in die Materialbahn geschnitten wird.

Bei Wellpappe kann über die Synchronisierungsmarkierungen zusätzlich das Schrumpfungsverhalten der Wellpappe beim Trocknen gemessen, kontrolliert und für das Einbringen der Schnittlinien in die Materialbahn berücksichtigt werden. Durch das Aufbringen der Synchronisierungsmarkierungen kann die Dimensionsstabilität der erzeugten Wellpappe überwacht werden. Hierzu werden auf der endlosen Wellpappenbahn jeweils in x-Richtung und/oder y-Richtung beabstandete Synchronisierungsmarkierungen aufgebracht, deren Abstand zueinander, d.h. die Distanz der Markierung in x- und/oder y-Richtung ausgemessen wird. Diese Abstände werden zu verschiedenen Zeitpunkten im Verfahrensablauf miteinander verglichen und hieraus die Schrumpfung der Wellpappenbahn während des erfindungsgemäßen Verfahrens berechnet. Die aktuellen Schrumpfungswerte der Wellpappenbahn werden mit historischen Werten (Erfahrungswerten) verglichen, die die gleiche Wellenart und die gleiche Materialkombination aufwiesen. Hieraus kann prognostiziert werden, welche weitere Schrumpfung der aktuell produzierten und verarbeiteten Wellpappenbahn zu erwarten ist. Optional können in die Berechnung der zu erwartenden Bahnschrumpfung auch die Messwerte der absoluten Feuchtigkeit der zu verarbeitenden Papierrollen als auch die Bahnfeuchtigkeiten der Wellpappenbahn an verschiedenen Stellen des Herstellungsverfahrens mit einfließen.

Bevorzugt sind mehrere formungebundene, variable Schneidwerkzeuge gruppenweise hintereinander in Laufrichtung der Materialbahn und/oder nebeneinander angeordnet, d.h. die Schneidwerkzeuge sind jeweils in x-Richtung und y-Richtung, bezogen auf die x-y-Ebene der Materialbahn versetzt oder parallel zueinander angeordnet. Der Wirkungsbereich der formungebundenen, variablen Schneidwerkzeuge deckt bevorzugt die gesamte x-y-Ebene der Materialbahn ab. Bevorzugt sind die Schneidwerkzeuge so angeordnet, dass die Materialbahn in mehrere ggf. überlappende Wirkungsbereiche aufgeteilt ist. Mehrere Schneidwerkzeuge d.h. eine Gruppe von Schneidwerkzeugen, die innerhalb einer Fläche gleichzeitig und ggf. synchron Schnittlinien in die Materialbahn schneiden, führen gemeinsam den Verfahrensschritt schneiden durch. Durch die Vermessung der Synchronisierungsmarkierungen ist es möglich, eine Synchronisierung der kollaborativ arbeitenden Schneidwerkzeuge zu realisieren. Unter kollaborativ wird erfindungsgemäß verstanden, dass sofern ein Schneidwerkzeug einen Zuschnitt oder ein Abfallstück noch nicht vollständig aus der endlosen Materialbahn ausgeschnitten hat, das weitere Ausschneiden aus der Materialbahn von einem der benachbarten oder nachfolgenden Schneidwerkzeuge fortgeführt werden kann, wobei sich das weitere Schneidwerkzeug an der aufgebrachten Synchronisierungsmarkierung orientiert, um den Verarbeitungsprozess passgenau fortsetzen zu können.

Alternativ oder zusätzlich ist eine Messung der Bahngeschwindigkeit möglich, um eine Synchronisierung der Bearbeitungsschritte durch die Schneidwerkzeuge und weiteren Werkzeuge zu erreichen. Die Bearbeitungswerkzeuge tauschen hierzu Informationen aus, um jederzeit einen Überblick über den aktuellen Fertigungszustand vor und nach jedem Bearbeitungsschritt zu haben, um den Gesamt-Fertigungsprozess kontrolliert steuern zu können. Alternativ erfolgt die Steuerung über die Steuerungseinheit.

In einer Ausführungsform werden durch ein mindestens erstes Schneidwerkzeug erste Schnittlinien und durch mindestens ein zweites Schneidwerkzeug zweite Schnittlinien in die Materialbahn geschnitten. Bevorzugt sind die zweiten Schnittlinien die Trennlinien zwischen benachbarten Zuschnitten oder die Konturen der Zuschnitte.

In einer Ausführungsform ist eine künstliche Intelligenz in die Planungseinheit integriert. Optional ist die Planungseinheit mit einem Netzwerk z.B. einem internen Netzwerk oder dem Internet verbunden. Die Daten für die benötigten Zuschnitte können über die Planungseinheit in das Verfahren eingespeist werden. In einer Ausführungsform können Kunden einen individuellen Zuschnitt entwerfen und über das Internet an die Planungseinheit senden.

Das erfindungsgemäße Verfahren ermöglicht es, pro Kunde und Auftrag eine individuelle Verpackung, sowohl hinsichtlich Form und Abmessungen als auch Bedruckung, zu erstellen, die direkt zum benötigten Zeitpunkt hergestellt wird, so dass auch keine Lagerkosten für Verpackungen entstehen. Die Verpackung wird individuell ondemand erstellt.

Das erfindungsgemäße Verfahren verarbeitet nicht Platten bzw. Bogen in einem mehrstufigen Prozess zu Zuschnitten, sondern stellt diese Zuschnitte direkt aus der Materialbahn d.h. der Wellpappenbahn her. Der Verarbeitungsprozess ist beliebig skalierbar. Somit kann das erfindungsgemäße Verfahren hinsichtlich der benötigten Produktions- bzw. Verpackungsmenge durch die Aneinanderreihung von zusätzlichen Bearbeitungszentren hinsichtlich der Produktionsgeschwindigkeit und -menge angepasst werden.

Bei dem erfindungsgemäßen Verfahren ist ein Zuschneiden in Platten ist nicht mehr notwendig. Auch das Stapeln, Transportieren, ggf. Lagern und Aufnehmen der Platten für den nächsten Bearbeitungsschritt entfallen vollständig. Die Produktionsgeschwindigkeit ist beim erfindungsgemäßen Verfahren durch das Entfallen der zuvor genannten, nicht produktiven Zwischenschritte, sowie der flexibleren Nutzung der Werkzeuge entsprechend erhöht gegenüber den herkömmlichen Verfahren.

Durch das erfindungsgemäße Verfahren ist eine deutlich freiere Anordnung der Verpackungszuschnitte auf der Bahn möglich. In den konventionellen Weiterverarbeitungsverfahren der Papier- oder Wellpappe-verarbeitenden Industrie werden bei der Vernutzung auf einem Bogen überwiegend Zuschnitte derselben Geometrie bzw. desgleichen Artikels angeordnet. Beim neu entwickelten Verfahren können alle zur Verfügung stehenden Artikel, die die gleiche Materialart aufweisen, auf der endlosen Materialbahn miteinander kombiniert werden, was zu einer sehr hohen Zahl an Kombinationsmöglichkeiten führt und hierdurch den produktionsbedingten Abfall drastisch reduziert.

Zudem entfällt bei dem erfindungsgemäßen Verfahren die Einschränkung der Anordnung der Zuschnitte in Bahnlaufrichtung. Die Materialbahn hat eine große Längenausdehnung bzw. ist endlos, was einen zusätzlichen Vorteil gegenüber der Verarbeitung von Tafeln und Bogen darstellt, deren Zuschnittsanordnung auf dem Bogen oder der Tafel durch die zwei Dimensionen der Bogen-bzw. Tafelfläche limitiert ist. Die freiere Anordnung der Verpackungszuschnitte auf der Materialbahn führt zu einer deutlich besseren Materialausnutzung, so dass weniger Produktionsabfall entsteht. Bei Verwendung des erfindungsgemäßen Verfahrens zur Verarbeitung von Wellpappenbahnen ist außerdem kein Zwischenlager notwendig, in dem die Wellpappe zunächst trocknen muss.

Das erfindungsgemäße Verfahren erlaubt individuell gestaltete, bedruckte oder unbedruckte Verpackungen herzustellen. Aufgrund der größeren Längenausdehnungen der Materialbahn kann im Vergleich zur Herstellung von Zuschnitten aus Platten eine Vielzahl von Verpackungen verschiedenster Dimensionen realisiert werden. Zudem ist durch das Schneiden mit einem formungebundenen Schneidwerkzeug eine freie Variation der Zuschnitte ohne einen Umbau eines formgebundenen Stanzwerkzeugs möglich. Das erfindungsgemäße Verfahren erlaubt es, eine beliebige Anzahl eines bestimmten Zuschnitts herzustellen, so sind sowohl Einzelstücke als auch Großserienprodukte möglich.

Das erfindungsgemäße Verfahren ist besonders vorteilhaft bei der Herstellung von Wellpappenzuschnitten.

Das erfindungsgemäße Verfahren wird in einer Ausführungsform direkt aus einer herkömmlichen Wellpappenerzeugungsanlage gespeist. Die Zuschnitte werden in diesem Fall direkt im Anschluss an den Wellpappenherstellungsprozess hergestellt. Bevorzugt wird das erfindungsgemäße Verfahren aus einer Wellpappenerzeugungsanlage gespeist, die keine Querschneider, keinen Schneidautomaten, keinen Rillautomaten, keine Paddelstation, keine Auszugstation und keine Ablagen aufweist. Wenn Wellpappenzuschnitte gemäß dem erfindungsgemäßen Verfahren hergestellt werden, können wesentliche Aggregate einer konventionellen Wellpappenerzeugungsanlage, d.h. alle Aggregate der Trockenpartie vollständig entfallen, da deren Funktion nicht mehr benötigt wird oder durch andere Verfahrensschritte des erfindungsgemäßen Verfahrens ersetzt werden.

Beim erfindungsgemäßen Verfahren sind keine Liegezeiten oder Akklimatisierungszeiten der Wellpappe erforderlich, da das zu erwartende Schrumpfungsverhalten der noch nicht dimensionsstabilen Wellpappenbahn durch das formungebundene Schneidwerkzeug berücksichtigt und durch das Skalieren des geplanten Zuschnitts im Voraus berechnet und angepasst werden kann. Die Zuschnittsform wird beim Schneiden in Abhängigkeit der Restfeuchte der Wellpappe vergrößert, so dass der Zuschnitt nach dem Schrumpfen die gewünschte Größe erhält. Die Schrumpfung der Wellpappenbahn quer zur Bahnlaufrichtung ist dabei signifikant größer als die Schrumpfung in Bahnlaufrichtung. Durch den Einsatz der Wellpappenbahn anstelle von Wellpappenbogen entfällt die Beschränkung, die Zuschnitte auf einer begrenzten Fläche anordnen zu müssen.

In einer Aufführungsform des erfindungsgemäßen Verfahrens wird die Materialbahn zusätzlich bedruckt, besonders im Digitaldruckverfahren. In einer Ausführungsform ist ein Digitaldruckverfahren in das erfindungsgemäße Verfahren integriert. Das digitale Bedrucken erfolgt entweder über die vollständige Materialbahn vor dem Schneiden durch das formungebundene Schneidwerkzeug oder nach dem Schneiden der ersten Schnittlinien zu einem späteren Zeitpunkt im Verfahrensablauf.

Das erfindungsgemäße Verfahren kann mit bedruckten oder unbedruckten Materialbahnen durchgeführt werden. Optional kann auch der fertige Zuschnitt in herkömmlicher Weise in einem separaten Verfahrensschritt bedruckt werden, was erfindungsgemäß weniger bevorzugt ist.

In einer Ausführungsform des erfindungsgemäßen Verfahrens wird die Materialbahn mit in einem oder mehreren Rillwerkzeugen mit Längsrillern und/oder Querrillern versehen, wobei das Rillen vor oder nach dem Schneiden erfolgen kann. Zusätzlich oder alternativ wird die Materialbahn mit einem oder mehreren Prägewerkzeugen mit Prägungen versehen, wobei die Prägungen vor oder nach dem Schneiden der Materialbahn erfolgen können. Das Aufbringen der Rillungen oder Prägungen kann entweder über die vollständige Materialbahn vor dem Schneiden erfolgen oder aber der einzelne Zuschnitt kann nach dem Schneiden gerillt und/oder geprägt werden.

Weiterhin ist es möglich, die Materialbahn im Bereich eines Zuschnitts auch mit einem Schnitt zu versehen, der die Materialbahn nicht vollständig sondern nur teilweise von der Oberseite des Materials bis zu einer definierten Tiefe einschneidet, um die Biegesteifigkeit in diesem Bereich zu reduzieren. Dieser Bereich kann später dazu genutzt werden, um den Zuschnitt an dieser Stelle definiert zu biegen. Der teilweise Einschnitt schafft somit die Funktion einer Rillung.

In einer Ausführungsform wird durch das Schneidwerkzeug eine Perforation der Materialbahn im Bereich eines Zuschnitts erzeugt. Bei einer Perforation wird die gesamte Materialbahn über eine definierte Strecke in regelmäßigen Abständen vollständig durchtrennt. Zwischen diesen Schnitten bleibt die Materialbahn vollständig unbeschädigt oder wird nur teilweise von der Oberfläche bis zu einer definierten Tiefe eingeschnitten. Auch hierdurch wird die Biegesteifigkeit der Materialbahn soweit reduziert, um diesen Bereich nach der vollständigen Erzeugung des Zuschnitts definiert biegen zu können. Dieses entspricht in seiner Funktion einer Perforation oder herkömmlichen Schneidrillung.

Bevorzugt erfolgt das Abtransportieren der Zuschnitte durch Entfernen der fertigen Zuschnitte aus der Materialbahn, wobei die Entfernung der fertigen Zuschnitte besonders bevorzugt mittels Robotersystemen oder Kugel-Ketten-Förderern erfolgt, besonders bevorzugt mittels Robotersystemen, die ggf. mit der Steuerungseinheit verbunden sind. Es können auch verschiedene Verfahrensweisen für den Abtransport kombiniert werden.

Der Abtransport der Zuschnitte aus der Materialbahn erfolgt bevorzugt nach der Entfernung der Abfallstücke aus der Zuschnittsfläche. Der abtransportierte Zuschnitt ist dann frei von Abfallstücken und umfasst nur noch den Zuschnitt selbst. In einer Variante erfolgt die Abfallentfernung aus dem Zuschnitt aber nach dem Abtransport der Zuschnitte aus der Materialbahn.

Bevorzugt erfolgt beim erfindungsgemäßen Verfahren die Entfernung der fertigen Zuschnitte aus der Materialbahn mittels Robotersystemen. Da die Koordinaten der Lage der Zuschnitte in der Materialbahn aus dem Layout der Zuschnitte und den Verarbeitungsdaten der vernetzten Bearbeitungszentren bekannt sind, werden die fertigen Zuschnitte durch den Einsatz von geeigneten Roboter-Systemen aus der endlosen Bahn entfernt. Bevorzugt sind die Robotersysteme hierzu mit der Steuerungseinheit verbunden. Hierzu werden beispielsweise Pick-and-Place-Roboter verwendet, die mit geeigneten Saug- und/oder Greifersystemen ausgestattet sind. Da die Geometrie der fertigen Zuschnitte bekannt ist, werden die Sauger und Greifer in eine geeignete Position gebracht bzw. verfahren, um den fertigen Zuschnitt zerstörungsfrei aus der Materialbahn zu entfernen und in einer gewünschten Position außerhalb der Materialbahn zu platzieren. Zur Erhöhung der Abnahmegeschwindigkeit der Robotersysteme, können mehrere Robotersysteme quer zur Laufrichtung der Materialbahn und/oder in Laufrichtung angeordnet, d.h. kaskadiert, werden, um kollaborativ arbeitend, sämtliche Zuschnitte aus der Materialbahn zu entfernen.

In einer Ausführungsform erfolgt der Abtransport der Zuschnitte mit mindestens einem Kugel-Ketten-Förderer. Zunächst wird hierzu die Materialbahn mit den fertigen Zuschnitten mittels einer geeigneten Umlenkwalze nach oben geführt. Damit die fertigen Zuschnitte nicht ebenfalls um die Umlenkwalze mit der restlichen Materialbahn weggefördert werden, befinden sich auf der Unterseite der fertigen Zuschnitte flächig angeordnete, vakuumbeaufschlagte Kugel-Kettenförderer, die die fertigen Zuschnitte weiterhin in der Position halten, so wie sie innerhalb der Materialbahn angeordnet sind. Die Kugel-Kettenförderer können die fertigen Zuschnitte flächig auf dem Vakuum in die gewünschte x-y-Richtung befördern und somit kontrolliert abtransportieren und z.B. einem nachgeschalteten Prozess zuführen. Die Fläche wird durch die x-y-Achsen aufgespannt.

In einer bevorzugten Ausführungsform umfasst das erfindungsgemäße Verfahren weiterhin die Schritte:
- Führung der Materialbahn mit Schnittlinien zu mindestens einem Abfallentfernungselement,
- Entfernen von Abfallstücken aus der Materialbahn mit mindestens einem Abfallentfernungselement.

Besonders bevorzugt wird die Materialbahn nach dem Entfernen der Abfallstücke mit mindestens einem Abfallentfernungselement zu mindestens einem zweiten Schneidwerkzeug, z.B. einer zweiten Gruppe von Schneidwerkzeugen, transportiert und die Materialbahn mit mindestens einem formungebundenen, variablen Schneidwerkzeug geschnitten, wobei mit dem Schneidwerkzeug zweite Schnittlinien in die Materialbahn eingebracht werden, die die Konturen eines Zuschnitts oder Teile eines Zuschnitts ausschneiden. Hierbei können weitere Abfallstücke entstehen, die in einem weiteren Abfallentfernungsschritt entfernen werden müssen. Bevorzugt sind alle unzusammenhängenden Abfallstücke bereits im ersten Abfallentsorgungsschritt beseitigt.

In einer Ausführungsform umfasst die Abfallentfernung mindestens einen der folgenden Verfahrensschritte:
- Einbringen der Materialbahn in einen Abfallentfernungsbereich, der unterhalb der Materialbahn und im Einflussbereich aller Abfallentfernungselemente keinerlei Bahnführungselemente, wie z.B. Rohrtische, Gurte, Riemen aufweist, die das Herausfallen des Abfalls aus der Materialbahn behindern können,
- Behandeln der geschnittenen Materialbahn mit Abfallentfernungselementen, die oberhalb der Materialbahn installiert sind und von oben auf die Materialbahn einwirken, um den Abfall im jeweiligen Einflussbereich der Abfallentfernungselemente aus der Materialbahn zu entfernen.

Ggf. ist ein großes Abfallstück in mehrere zu entfernende Teilabfallstücke untergliedert, damit das betreffende Abfallstück, angepasst auf die Wirkungsweise des Abfallentfernungselements, zuverlässig aus der Materialbahn entfernt wird.

Um die vollständige Entfernung der Abfallstücke aus der Materialbahn zu verbessern, können die nachfolgend aufgeführten Verfahren kaskadenförmig hintereinander in Bahnlaufrichtung angeordnet werden und miteinander kombiniert und in der Reihenfolge und Anzahl beliebig angeordnet werden. Somit ist auch das Abfallentfernungsverfahren, ebenso wie die anderen Teilprozesse des erfindungsgemäßen Verfahrens, beliebig skalierbar.

Bei der konventionellen Herstellung von Zuschnitten werden die Bogen während des Abfallentfernungsprozesses durch Riemen oder Seile weiterhin geführt und/oder transportiert. Dieses ist notwendig, um den Zuschnitt während des Durchlaufs durch die Abfallentfernungsstation weiterhin definiert zu führen und/oder zu transportieren, behindert aber den Abfallentfernungsprozess und dessen Auswurf nach unten, da diese Riemen oder Seile unterhalb eines zu entfernenden Abfallstücks liegen können.

Beim erfindungsgemäßen Verfahren wird die Materialbahn im Wirkungsbereich der Abfallentfernungselemente nur durch freien Bahnzug und die Bahnsteifigkeit der Materialbahn geführt, stabilisiert und transportiert. Außerhalb des Wirkungsbereichs der Abfallentfernungselemente wird die Materialbahn wieder durch statische oder dynamische Bahnführungselemente definiert geführt und ggf. transportiert. Als statische Bahnführungselemente seien an dieser Stelle beispielhaft Rohrtische, Führungs- und Stützleisten und als dynamische Bahnführungselemente angetriebene und mit Bahngeschwindigkeit laufende Gurte und Riemen (mit und ohne Vakuum) oder Führungsseile aufgeführt.

Die Abfallentfernungselemente sind in einer Ausführungsform flächig wirkende Abfallentfernungselement, bevorzugt Druckluftbalken, Luftschwerter oder Luftleisten, Bürsten mit elastischen Borsten oder Vakuumgurte. Den flächig wirkenden Abfallentfernungsverfahren ist gemein, dass alle auf einer Traverse installierten Abfallentfernungselemente gleichzeitig wirken und nur für den Fall von der Steuerungseinheit gesteuert werden müssen, sofern die Einwirkungszeit dieser Abfallentfernungselemente eingeschränkt werden soll, z.B. um Energie zu sparen.

Wenn die flächig wirkenden Abfallentfernungselemente Druckluftdüsen sind, werden die Abfallentfernungselemente auf Traversen quer zur Laufrichtung oberhalb der Materialbahn installiert und wirken von oben auf die Materialbahn, um den Abfall im jeweiligen Einflussbereich der Abfallentfernungselemente aus der Materialbahn zu entfernen. An einer in Bahnlaufrichtung angeordneten Traverse werden oberhalb der Materialbahn zahlreiche Luftdüsen, wie z.B. runde oder ovale Düsenöffnungen, aus denen Druckluft ausströmt, oder ein Luftmesser installiert. Luftmesser werden auch Luftklinge, Luftkanone, Blasmesser, Vorhang, Transvektor, Luftstromverstärker, Luftrakel, Luftvorhang oder Luftschwert genannt. Die Düsenöffnung ist bei diesen Komponenten schlitzförmig und verläuft komplett oder segmentiert über die gesamte Bahnbreite. Aus diesen Komponenten strömt definiert Druckluft aus. Der konzentrierte Luftstoß erzeugt auf der Oberseite des vollständig ausgeschnittenen Abfallstücks eine Kraft F, die das betreffende Abfallstück aus der Materialbahn nach unten drückt und somit aus der Materialbahn entfernt.

In einer Ausführung erfolgt der Verfahrensschritt der Abfallentfernung mittels rotierender Bürste(n) mit elastischen Borsten. Quer zur Bahnlaufrichtung ist oberhalb der Materialbahn eine rotierende Bürste angeordnet, die mit elastischen Borsten ausgestattet ist, deren Borsten in Bahnlaufrichtung rotieren. Die elastischen Borsten der Walze berühren die gesamte Oberfläche der Materialbahn und erzeugen auf der Oberfläche der Bahn eine Kraft F, deren Teilkomponente in Richtung der Erdanziehungskraft wirkt und die im Wirkungsbereich der Walze befindlichen Abfallstücke nach unten aus der endlosen Bahn drückt.

In einer Ausführung erfolgt der Verfahrensschritt der Abfallentfernung mittels eines sich mit Bahngeschwindigkeit bewegenden Vakuumgurtes. Unterhalb der Materialbahn ist ein Vakuumgurt angeordnet, der die Materialbahn von unten berührt und sich mit der Materialbahn-Geschwindigkeit in Bahnlaufrichtung bewegt. Der Vakuumgurt weist eine sehr feine Lochung auf. Unterhalb des gelochten Gurtes ist ein Vakuumkasten installiert, so dass die Materialbahn inkl. der im Bearbeitungszentrum vollständig ausgeschnittenen Abfallstücke in Richtung des rotierenden Vakuumgurtes ansaugt werden. Durch Umlenkrollen am Ende des Vakuumgurtes wird der Vakuumgurt definiert umgelenkt. Das Vakuum im Vakuumgurt wird so justiert, dass die Abfallstücke durch den erzeugten Unterdruck nach unten aus der Materialbahn herausgeführt werden, während die Bahn zum nächsten Verfahrensschritt in Bahnlaufrichtung (MD-Richtung) weiter transportiert wird. Da unterhalb der Umlenkwalze kein Unterdruck sondern der Umgebungsdruck vorhanden ist, fallen die Abfallstücke nach unten. Unterstützend können die Abfallstücke durch quer zur Bahnlaufrichtung installierte Abfallbürsten von der Unterseite des Vakuumgurtes abgestreift und somit entfernt werden.

In einer weiteren Ausführungsform sind die Abfallentfernungselemente lokal wirkende Abfallentfernungselemente, bevorzugt Luftdüsen oder bewegliche Stößel.

In einer Ausführung erfolgt der Verfahrensschritt der Abfallentfernung mittels senkrecht über der Materialbahn angeordneter und individuell ansteuerbarer, vertikal beweglicher Stößeln (Pins). An einer quer zur Bahnlaufrichtung angeordneten Traverse sind oberhalb und senkrecht der Materialbahn zahlreiche vertikal bewegliche Stößel angebracht, die individuell von der Steuerungseinheit angesteuert werden, sobald sich ein zu entfernendes Abfallstück in deren Einflussbereich befindet. Sobald der betreffende Stößel das Signal von der übergeordneten Steuerung erhält, stößt er um eine definierte Strecke in Richtung der Materialbahn, berührt das zu entfernende Abfallstück und drückt anschließend das betreffende Abfallstück, das vollständig ausgeschnitten wurde, aus der Materialbahn mit einer definierten Kraft F nach unten und entfernt und somit das Abfallstück vollständig und definiert aus der Materialbahn. Noch bevor die Materialbahn die räumliche Umgrenzung des betreffenden Abfallstücks erreicht hat, fährt der vertikal bewegliche Stößel wieder in seine Ausgangs- bzw. Ruheposition über der Materialbahn zurück und wartet auf das nächste Signal zur Abfallentfernung seitens der übergeordneten Steuerung.

In einer Ausführungsform erfolgt der Verfahrensschritt der Abfallentfernung mittels individuell ansteuerbarer Druckluftdüsen. Hierzu sind an einer quer zur Bahnlaufrichtung angeordneten Traverse oberhalb der Materialbahn zahlreiche Luftdüsen installiert, die individuell von einer Steuerung angesteuert werden, sobald sich ein zu entfernendes Abfallstück im Einflussbereich der Luftdüse befindet. Der konzentrierte Luftstoß erzeugt auf der Oberseite des vollständig von den Schneidwerkzeugen ausgeschnittenen Abfallstücks eine Kraft F, die das betreffende Abfallstück aus der Materialbahn nach unten drückt und somit aus der Materialbahn entfernt.

Alternativ werden auch Kombinationen verschiedener Abfallentfernungselemente eingesetzt.

Sofern die Abfallentfernung nicht bei in der Materialbahn liegenden Zuschnitten erfolgt, werden die Abfälle in einer Ausführungsform erst aus dem fertigen Zuschnitt entfernt, nachdem dieser mittels der Robotersysteme aus der Materialbahn entnommen wurde. Hierfür werden beispielsweise Bearbeitungsverfahren eingesetzt, die mittels elastischer Bürsten, rütteln des Zuschnitts oder gezielt ansteuerbarer Luftdüsen die Abfälle aus dem fertigen Zuschnitt kontrolliert entfernen. Das Robotersytem transportiert die Zuschnitte zu dem jeweiligen Abfallentfernungsschritt, in dem die Zuschnitte vom Abfall befreit werden.

In einer bevorzugten Ausführungsform umfasst das erfindungsgemäße Verfahren die Schritte
- Einbringen von ersten Schnittlinien in die Materialbahn mit mindestens einem ersten Schneidwerkzeug, wobei die ersten Schnittlinien die Kontur eines Abfallstücks und/oder Teile der Kontur eines Zuschnitts aus der Materialbahn ausschneiden, ohne dass die Materialbahn quer zur Laufrichtung zerschnitten wird,
- Transportieren der Materialbahn mit den ersten Schnittlinien zu mindestens einem Abfallentfernungselement,
- Entfernen aller Abfallstücke aus der Materialbahn mit Abfallentfernungselementen,
- Transportieren der Materialbahn ohne Abfallstücke zu mindestens einem zweiten Schneidwerkzeug,
- Einbringen von zweiten Schnittlinien in die Materialbahn mit den zweiten Schneidwerkzeugen, wobei die zweiten Schnittlinien die Kontur eines Zuschnitt oder Teile der Kontur eines Zuschnitts aus der Materialbahn ausschneiden,
- Abtransportieren der fertigen, abfallfreie Zuschnitte und
- ggf. Schneiden der verbleibende Materialbahn ohne Zuschnitte mit Querschneider in Streifen oder Zerteilen mittels eines Shredders.

Diese Anordnung der Verfahrensschritte hat zusätzlich den Vorteil, dass die Führung der Materialbahn während der Abfallentfernung nicht zwangsläufig mit Führungsseilen oder-riemen erfolgen muss, da die Materialbahn nicht quer zur Laufrichtung vollständig zerschnitten wird oder soweit beschädigt ist, dass eine Bahnführung oder ein Bahntransport nicht mehr möglich ist. Die Materialbahn kann mittels eines freien Bahnzugs ohne untere Führungselemente im Bereich der Abfallentfernungselemente durch den Bereich der Abfallentfernung geführt werden, sofern die Zugfestigkeit der Bahn die aktuellen Bahnzugkräfte nicht überschreitet.

In einer bevorzugten Ausführungsform umfasst das erfindungsgemäße Verfahren die Schritte
- Aufbringen von Synchronisierungsmarkierungen auf die Materialbahn,
- Erfassen der Synchronisierungsmarkierungen mit mindestens einer Sensoreinheit,
- Übertragen der Daten zur Position der Synchronisierungsmarkierungen von der Sensoreinheit an eine Steuerungseinheit,
- Einbringen von ersten Schnittlinien in die Materialbahn mit mindestens einem ersten Schneidwerkzeug, wobei die Steuerung des Schneidwerkzeugs durch die Steuerungseinheit basierend auf den übertragenen Daten erfolgt,
- Transportieren der Materialbahn mit den ersten Schnittlinien zu mindestens einem Abfallentfernungselement,
- Entfernen aller Abfallstücke aus der Materialbahn mit den Abfallentfernungselementen,
- Transportieren der Materialbahn ohne Abfallstücke zu mindestens einem zweite Schneidwerkzeug,
- Erfassen der Synchronisierungsmarkierungen mit mindestens einer Sensoreinheit,
- Übertragen der Daten zur Position der Synchronisierungsmarkierungen von der Sensoreinheit an eine Steuerungseinheit,
- Einbringen von zweiten Schnittlinien in die Materialbahn mit mindestens einem zweiten Schneidwerkzeug, wobei die Steuerung des Schneidwerkzeugs durch die Steuerungseinheit basierend auf den übertragenen Daten erfolgt,
- Abtransportieren der fertigen, abfallfreie Zuschnitte und
- ggf. Schneiden der verbleibende Materialbahn ohne Zuschnitte mit Querschneider in Streifen oder Zerteilen mittels eines Shredders.

Das Bedrucken der Materialbahn und das Rillen oder Prägen der Materialbahn kann zusätzlich und unabhängig von den weiteren Verfahrensschritten erfolgen. Die Wahl der notwendigen Verfahrensschritte ist vom gewünschten Produkt abhängig. Bei einer unbedruckten Verpackung muss z.B. eine Rillung eingebracht werden, aber kein Bedrucken und kein Prägen erfolgen. Bei einem Werbeaufsteller muss z.B. ein Druck erfolgen, aber kein Perforieren oder Prägen.

Die im erfindungsgemäßen Verfahren hergestellten Zuschnitte sind beispielsweise Zuschnitte für Verpackungen wie Versandkartons, Umverpackungen, Faltschachteln, Faltkisten oder für Displays bzw. Aufsteller, wie POS-Displays, Thekenaufsteller oder Werbeaufsteller. Sie werden nach der Herstellung auf übliche Weise weiterverarbeitet, beispielsweise aufgefaltet und verklebt.

Gegenstand der Erfindung ist weiterhin eine Vorrichtung zur Herstellung von Zuschnitten aus Wellpappe umfassend
- eine Zuführungsvorrichtung zur Zuführung einer Wellpappenbahn, wobei die Zuführungsvorrichtung eine Wellpappenerzeugungsanlage zur Erzeugung einer Wellpappenbahn ist,
- eine ersten Schnittstation mit mindestens einem formungebundenen, variablen Schneidwerkzeug, wobei das formungebundene, variable Schneidwerkzeug ein Laser oder ein Plasmaschneider ist und die Vorrichtung bevorzugt kein formgebundenes Stanzwerkzeug aufweist,
- mindestens eine Transportvorrichtung mit der die Materialbahn in der Vorrichtung transportiert wird,
- mindestens eine Abfallentfernungsstation, die keine Bahnführungselemente oder Bahnförderelemente aufweist und
- mindestens eine Planungseinheit, die die Lage der Zuschnitte in der Materialbahn plant, wobei das zu erwartende Schrumpfungsverhalten der noch nicht dimensionsstabilen Wellpappenbahn durch das formungebundene Schneidwerkzeug berücksichtigt und durch das Skalieren des geplanten Zuschnitts im Voraus berechnet und angepasst werden kann.

Die erfindungsgemäße Vorrichtung wird bevorzugt zur Durchführung des erfindungsgemäßen Verfahrens verwendet.

Bevorzugt weist die Schnittstation weiterhin mindestens eine Sensoreinheit und mindestens eine Steuerungseinheit auf, die mit der Sensoreinheit verbunden ist, wobei die Sensoreinheit einen Sensor zur Erfassung der Position der Synchronisierungsmarkierungen aufweist und die Steuerungseinheit eine Steuerung des Schneidwerkzeugs umfasst.

Die erfindungsgemäße Vorrichtung kann ein modulares System von verschiedenen Bearbeitungsstationen sein. Bevorzugt hat jede Station einen eigenen Antrieb, sodass die Regelung voneinander unabhängig erfolgen kann. Die Steuerung der Vorrichtung erfolgt bevorzugt über mindestens eine Steuerungseinheit, bevorzugt elektronisch bzw. über Prozessrechner.

Bevorzugt sind in einer Schnittstation mehrere formungebundene, variable Schneidwerkzeuge angeordnet, bevorzugt hintereinander in Laufrichtung der Materialbahn und/oder nebeneinander, d.h. die Schneidwerkzeuge sind jeweils in x-Richtung und y-Richtung, bezogen auf die x-y-Ebene der Materialbahn versetzt oder parallel zueinander angeordnet.

Die Vorrichtung weist eine Planungseinheit auf, die die Lage der Zuschnitte in der Materialbahn plant. Die Planungseinheit übermittelt die Informationen an die Steuerungseinheit, die die Schneidwerkzeuge und ggf. die Abfallentfernungsstationen und Abtransporteinrichtungen basierend auf den Daten der Planungseinheit steuert. Optional bilden die Steuerungseinheit und die Planungseinheit eine Einheit. Die Planungseinheit kann eine künstliche Intelligenz beinhalten und/oder mit dem Internet verbunden sein.

Die Zuführungsvorrichtung ist erfindungsgemäß eine Wellpappenerzeugungsanlage zur Erzeugung einer Wellpappenbahn. Die Wellpappenerzeugungsanlage benötigt in der erfindungsgemäßen Vorrichtung keine Querschneider und keine Schneidautomaten zum Schneiden in Bahnlaufrichtung mehr, da die Zuschnitte direkt und stanzwerkzeuglos, z.B. durch Laserschneideinrichtungen in der Schnittstation erzeugt werden.

Optional wird bei dieser Ausführungsform eine konventionelle Wellpappentafelherstellung und Wellpappenstapelbildung in die erfindungsgemäße Vorrichtung integriert. Durch eine zusätzliche Umlenkung der endlosen Wellpappenbahn über die konventionellen Ablagen der Wellpappenerzeugungsanlage in die erfindungsgemäße Vorrichtung kann die Materialbahn dem erfindungsgemäßen Verfahren zugeführt werden und gleichzeitig die Vorrichtungen für eine herkömmliche Verarbeitung der Wellpappe erhalten bleiben. Es ist beispielsweise möglich, dass zunächst eine lange Einzelbahn für den digitalen Bearbeitungsprozess hergestellt wird und dann wieder auf den konventionellen Wellpappenherstellungsprozess umgeschaltet wird. Während konventionell Wellpappentafeln produziert werden, kann dann die Einzelbahn erfindungsgemäß zu Wellpappenzuschnitten weiterverarbeitet werden.

Bevorzugt weist die erfindungsgemäße Vorrichtung mindestens eine Abfallentfernungsstation auf. Die Abfallentfernungsstation weist bevorzugt flächig wirkende Abfallentfernungselement, besonders bevorzugt Druckluftbalken, Bürsten oder Vakuumgurte, oder lokal wirkende Abfallentfernungselemente, besonders bevorzugt Luftdüsen oder bewegliche Stößel, oder eine Kombination verschiedener Abfallentfernungselemente auf. Die Beschaffenheit der Abfallentfernungselemente entspricht den beim erfindungsgemäßen Verfahren beschriebenen Abfallentfernungselementen.

In einer Ausführungsform weist die erfindungsgemäße Vorrichtung eine erste Schnittstation, eine erste Abfallentfernungsstation, eine zweite Schnittstation und mindestens eine Abtransporteinheit für die Zuschnitte auf. Die Abtransporteinheit ist bevorzugt ein Robotersystem oder ein Kugel-Ketten-Förderer, besonders bevorzugt ein Robotersystem, das ggf. mit der Steuerungseinheit verbunden ist.

Die Erfindung wird anhand der nachfolgenden Figuren näher erläutert. Es zeigen:
- Fig. 1: eine Vorrichtung zur Herstellung von Wellpappe gemäß dem Stand der Technik
- Fig.2: einen schematischen Verlauf einer Ausführungsform des erfindungsgemäßen Verfahrens,
- Fig. 3: einen Ausschnitt aus einem erfindungsgemäßen Verfahren mit dem Verfahrensschritt "Schneiden",
- Fig. 4: einen Ausschnitt aus einem erfindungsgemäßen Verfahren mit dem Verfahrensschritt "Abfall entfernen",
- Fig. 5: einen Ausschnitt aus einem erfindungsgemäßen Verfahren mit einer weiteren Ausführungsform des Verfahrensschritts "Abfall entfernen" und
- Fig. 6: eine erfindungsgemäße Vorrichtung, die von einer Wellpappenerzeugungsanlage gespeist wird.

Figur 2 zeigt den schematischen Ablauf einer Ausführungsform des erfindungsgemäßen Verfahrens. In einem ersten Verfahrensschritt 1 wird eine Materialbahn in das Verfahren eingespeist. Die Materialbahn ist z.B. eine Wellpappenbahn, eine Kartonbahn, eine Kunststoffbahn oder eine Wabenwellpappenbahn. Die Materialbahn wird zu einer Gruppe erster Schneidwerkzeuge transportiert und im Verfahrensschritt 2 werden die Konturen der Abfallstücke in die Materialbahn geschnitten. Im folgenden Verfahrensschritt 3 werden die Abfallstücke mit einem oder mehreren Abfallentfernungselementen aus der Materialbahn entfernt. Die von den Abfallstücken befreite Materialbahn wird zu einer Gruppe zweiter Schneidwerkzeuge transportiert und im Verfahrensschritt 4 die Kontur (Außengeometrie) der Zuschnitte mit den zweiten Schneidwerkzeugen in die Materialbahn geschnitten. Ein Robotersystem entnimmt die fertigen Zuschnitte aus der Materialbahn (Verfahrensschritt 5) und transportiert sie zu einem Lagerort oder zu einem weiteren Verarbeitungsschritt. Die Restbahn wird im Verfahrensschritt 6 entsorgt.

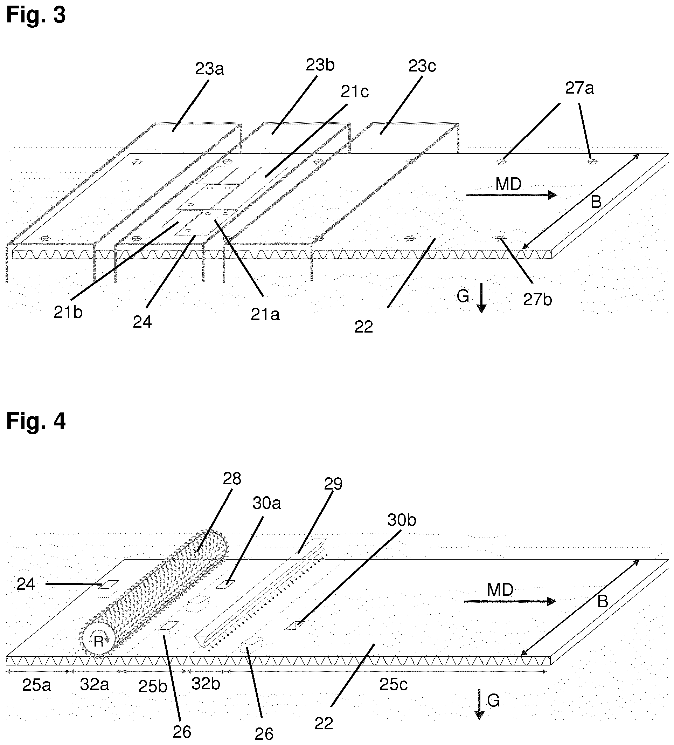

Figur 3 zeigt einen Ausschnitt aus einem erfindungsgemäßen Verfahren. Eine Materialbahn 22 wird in Bahnlaufrichtung MD, gemäß des Pfeils, zu mehreren Schneidwerkzeugen 23 transportiert. Auf der Materialbahn 22 befinden sich mehrere Synchronisierungsmarkierungen 27. Die Schneidwerkzeuge 23a, 23b und 23c schneiden innerhalb ihres Wirkungsbereiches Schnittlinien 24 in die Materialbahn 22. Die Schnittlinien 24 sind im dargestellten Fall die Konturen verschiedener Zuschnitte 21a, 21b und 21c. In Figur 3 sind die Zuschnitte 21a, 21b und 21c so angeordnet, dass keine Abfallstücke zwischen den verschiedenen Zuschnitten entstehen. Eine nicht dargestellte Sensoreinheit misst den Abstand zwischen zwei Synchronisierungsmarkierungen 27a und 27b. Hierüber kann die Lage der Zuschnitte und die Breite der Materialbahn B gemessen und beim Schneidvorgang ggf. die Schrumpfung der Bahn berücksichtigt werden.

Figur 4 zeigt eine Ausführungsform des Verfahrensschritts der Abfallentfernung. Eine Materialbahn 22 mit Schnittlinien 24, die der Kontur eines Abfallstücks 26 entsprechen, wird in Bahnlaufrichtung MD unter zwei flächig wirkenden Abfallentfernungselementen 28,29 entlang transportiert. In Teilbereichen 25 befinden sich unterhalb der Materialbahn Bahnführungs- und/oder Förderelemente. Das erste Abfallentfernungselement 28 ist eine rotierende Bürste mit elastischen Borsten, die sich über die gesamte Breite B der Materialbahn 22 erstreckt. Die Bürste rotiert in Richtung des Pfeils R und übt eine Kraft von oben auf die Materialbahn aus. Hierdurch fallen die Abfallstücke nach unten aus der Materialbahn, so dass Ausschnitte 30a entstehen. Im Wirkbereich 32a des Abfallentfernungselements 28 sind unterhalb der Materialbahn keine Bahnführungs- oder Förderelemente installiert. Im weiteren Bahnverlauf nach dem Teilbereich 25b wirkt ein zweites Abfallentfernungselement 29 auf die Materialbahn. Das Abfallentfernungselement 29 weist diverse Luftdüsen auf, aus denen Druckluft auf die Materialbahn geblasen wird. Durch den Luftdruck werden die Abfallstücke nach unten aus der Materialbahn gedrückt, so dass Ausschnitte 30b entstehen. Im Wirkbereich 32b des Abfallentfernungselements 29 sind unterhalb der Materialbahn ebenfalls keine Bahnführungs- oder Förderelemente installiert. Es ist erkennbar, dass die Materialbahn im Bereich der Abfallentfernungselemente nicht durch Bahnführungs- oder Förderelemente getragen wird, so dass die Abfallentfernung im Wirkungsbereich der Abfallentfernungselemente nicht behindert wird.

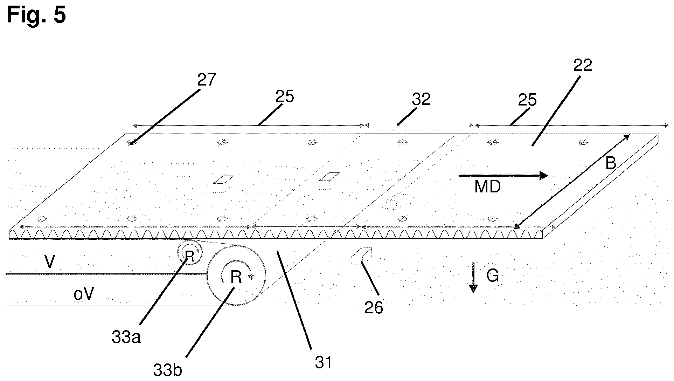

Figur 5 zeigt eine weitere Ausführungsform des Verfahrensschritts der Abfallentfernung. Die Abfallentfernung erfolgt mittels eines Vakuumgurtes 31, der sich mit Bahngeschwindigkeit in Bahnlaufrichtung MD unter der Materialbahn 22 bewegt. Der Vakuumgurt 31 berührt die Unterseite der Materialbahn 22. Durch den Vakuumgurt 31 erfolgt im Teilbereich 25 eine Bahnführung unterhalb der Materialbahn. Hierzu wird im Bereich V ein definiertes Vakuum unterhalb des Vakuumgurtes 31 erzeugt. Der Vakuumgurt 31 weist eine nicht dargestellte sehr feine Lochung auf. Die Umlenkrollen 33a, 33b am Ende des Vakuumgurtes lenken diesen um. Die vom Vakuum angesaugten Abfallstücke 26 werden nach unten aus der Materialbahn 22 herausgeführt, während die Materialbahn zum nächsten Verfahrensschritt transportiert wird. Im Bereich oV wird kein Vakuum erzeugt, es liegt hier nur der Umgebungsdruck an. Im Wirkbereich 32 sind unterhalb der Materialbahn keine Bahnführungs- oder Förderelemente installiert. Die Abfallstücke 26 fallen der Erdanziehung G folgend nach unten.

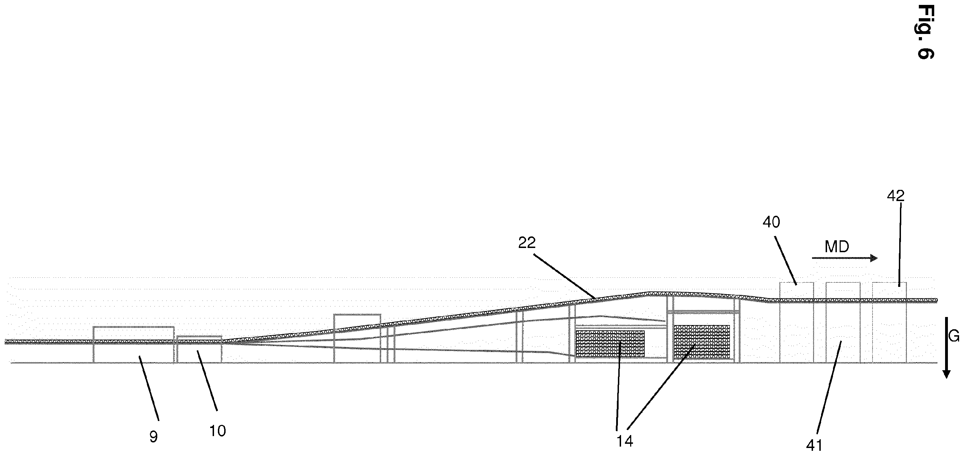

Figur 6 zeigt eine erfindungsgemäße Vorrichtung, die aus einer herkömmlichen Wellpappenerzeugungsanlage mit einer endlosen Wellpappenbahn gespeist wird. Der Aufbau der Wellpappenerzeugungsanlage entspricht dabei der Nasspartie A gemäß Figur 1. An die Wellpappenerzeugungsanlage schließt sich eine Schnittstation 40 an, in der mehrere formungebundene Schneidwerkzeuge 1. Schnittlinien in die Wellpappenbahn 22 schneiden. Die Wellpappenbahn 22 wird weiter in eine Abfallentfernungsstation 41 transportiert, in der die Abfallstücke entfernt werden. Die von den Abfallstücken befreite Wellpappenbahn 22 wird dann in eine 2. Schnittstation 42 transportiert, in der 2. Schnittlinien in die Wellpappenbahn geschnitten werden. Alternativ ist es möglich, die Wellpappe quer zu schneiden und die Tafeln in den Ablagen 14 zu stapeln.

**Bezugszeichenliste**

| | |
|---|---|
| Abrollständer | 1 |
| Splicer | 2 |
| Vorheizer | 3 |
| Vorbereiter (drehbarer Heizzylinder mit Befeuchtung) | 4 |
| Wellenagregat | 5 |
| Hochtransport | 6 |
| Brücke | 7 |
| Vorheizzylinder | 8 |
| Beklebemaschine | 9 |
| Heiz-und Zugpartie | 10 |
| Kurzquerschneider | 11 |
| Rill-und Schneidaggregat | 12 |
| Querschneider | 13 |
| Ablage | 14 |
| Zuschnitt | 21 |
| Materialbahn | 22 |
| Schneidwerkzeug | 23 |
| Schnittlinie | 24 |
| Teilbereich mit Bahnführungs- und/oder Bahnförderelementen | 25 |
| Abfallstück | 26 |
| Synchronisierungsmarkierung | 27 |
| Rolle mit rotierenden, elastischen Borsten | 28 |
| Luftmesser | 29 |
| Ausschnitt in Materialbahn | 30 |
| Vakuumgurt | 31 |
| Wirkungsbereich Abfallentfernungselement ohne Bahnführungs- oder Bahnförderelemente | 32 |
| Umlenkrolle | 33 |
| Schnittstation | 40 |
| Abfallentfernungsstation | 41 |
| Schnittstation | 42 |
| Bahnlaufrichtung | MD |
| Breite der Materialbahn | B |
| Rotationsrichtung | R |
| Erdanziehung | G |
| Bereich mit Vakuum | V |
| Bereich ohne Vakuum | oV |

## Patentansprüche

1. Verfahren zur Herstellung von Zuschnitten aus Wellpappe umfassend die Schritte
- Führung einer Materialbahn, in den Wirkungsbereich eines formungebundenen, variablen Schneidwerkzeugs und
- Schneiden der Materialbahn mit mindestens einem formungebundenen, variablen Schneidwerkzeug, wobei mit dem Schneidwerkzeug Schnittlinien in die Materialbahn eingebracht werden, die die Kontur eines Zuschnitt, eines Abfallstücks oder Teile der Kontur eines Zuschnitts oder Abfallstücks in der Materialbahn erzeugen,
**dadurch gekennzeichnet, dass** die Materialbahn eine Wellpappenbahn ist, die direkt aus einer Wellpappenerzeugungsanlage gespeist wird und in einem Planungsschritt eine Planungseinheit die Lage der Zuschnitte in der Materialbahn plant, wobei das zu erwartende Schrumpfungsverhalten der noch nicht dimensionsstabilen Wellpappenbahn durch das formungebundene Schneidwerkzeug berücksichtigt und durch das Skalieren des geplanten Zuschnitts im Voraus berechnet und angepasst werden kann.

2. Verfahren gemäß Patentanspruch 1, **dadurch gekennzeichnet, dass** das formungebundene, variable Schneidwerkzeug ein Laser oder ein Plasmaschneider ist und das Verfahren bevorzugt ohne ein formgebundenes Stanzwerkzeug durchgeführt wird.

3. Verfahren gemäß Patentanspruch 1 oder 2, **dadurch gekennzeichnet, dass** das Verfahren weiterhin die Schritte umfasst
- Aufbringen von Synchronisierungsmarkierungen auf die Materialbahn vor der Führung zu einem Schneidwerkzeug,
- Erfassen der Synchronisierungsmarkierungen mit mindestens einer Sensoreinheit,
- Übertragen der Daten zur Position der Synchronisierungsmarkierungen von der Sensoreinheit an eine Steuerungseinheit,
- Steuerung des Schneidwerkzeugs durch die Steuerungseinheit basierend auf den übertragenen Daten, so dass die Schnittlinien von dem Schneidwerkzeug abhängig von der Position der Synchronisierungsmarkierungen aufgebracht werden.

4. Verfahren gemäß einem der vorhergehenden Patentansprüche, **dadurch gekennzeichnet, dass** das Schneiden der Materialbahn mit mehreren formungebundene, variablen Schneidwerkzeugen erfolgt, die bevorzugt hintereinander in Laufrichtung der Materialbahn und/oder nebeneinander angeordnet sind.

5. Verfahren gemäß einem der vorhergehenden Patentansprüche, **dadurch gekennzeichnet, dass** in einem weiteren Verfahrensschritt
- das Entfernen der Abfallstücke aus der Materialbahn und Abtransportieren der Zuschnitte erfolgt oder
- das Abtransportieren der Zuschnitte und Entfernen der Abfallstücke aus der Materialbahn erfolgt.

6. Verfahren gemäß einem der vorhergehenden Patentansprüche, **dadurch gekennzeichnet, dass** die Materialbahn eine endlose Wellpappenbahn ist.

7. Verfahren gemäß einem der vorhergehenden Patentansprüche, **dadurch gekennzeichnet, dass** das Verfahren weiterhin die Schritte umfasst:
- Führung der Materialbahn mit Schnittlinien zu mindesten einem Abfallentfernungselement,
- Entfernen von Abfallstücke aus der Materialbahn mit dem Abfallentfernungselement.

8. Verfahren gemäß Patentanspruch 7, **dadurch gekennzeichnet, dass** die Materialbahn nach dem Entfernen der Abfallstücke zu mindestens einem weiteren formungebundenen, variablen Schneidwerkzeug transportiert wird und die Materialbahn mit dem mindestens einem formungebundenen, variablen Schneidwerkzeug geschnitten wird, wobei mit dem Schneidwerkzeug zweite Schnittlinien in die Materialbahn eingebracht werden, die einen Zuschnitt oder Teile eines Zuschnitts ausschneiden.

9. Verfahren gemäß Patentanspruch 8, **dadurch gekennzeichnet, dass** die zweiten Schnittlinien die Trennlinien zwischen benachbarten Zuschnitten sind.

10. Verfahren gemäß einem der vorhergehenden Patentansprüche, **dadurch gekennzeichnet, dass** die Materialbahn bedruckt wird, besonders im Digitaldruckverfahren.

11. Verfahren gemäß einem der vorhergehenden Patentansprüche, **dadurch gekennzeichnet, dass** die Materialbahn mit einem oder mehreren Rillwerkzeugen mit Längsrillern oder Querrillern versehen wird, wobei die Rillwerkzeuge vor oder hinter dem ersten Schneidwerkzeug angeordnet sein können und/oder die Materialbahn mit einem oder mehreren Prägewerkzeugen mit Prägungen versehen wird, wobei die Prägewerkzeuge vor oder hinter dem mindestens einen ersten Schneidwerkzeug angeordnet sein können.

12. Verfahren gemäß einem der vorhergehenden Patentansprüche, **dadurch gekennzeichnet, dass**
- mit mindestens einem ersten Schneidwerkzeug erste Schnittlinien in die Materialbahn eingebracht werden, die die Kontur eines Abfallstücks und/oder Teile der Kontur eines Zuschnitts aus der Materialbahn ausschneiden,
- die Materialbahn mit den ersten Schnittlinien zur mindestens einem Abfallentfernungselement transportiert wird,
- die ein oder mehreren Abfallentfernungselemente alle Abfallstücke aus der Materialbahn entfernen,
- die Materialbahn ohne Abfallstücke zu einem zweite Schneidwerkzeug transportiert wird,
- mit den zweiten Schneidwerkzeugen zweite Schnittlinien in die Materialbahn eingebracht werden, die die Kontur eines Zuschnitt oder Teile der Kontur eines Zuschnitts aus der Materialbahn ausschneiden,
- der fertige, abfallfreie Zuschnitt abtransportiert wird und
- ggf. die verbleibende Materialbahn ohne Zuschnitte durch Querschneider in Streifen geschnitten wird oder mittels eines Shredders zerteilt wird.

13. Verfahren gemäß einem der vorhergehenden Patentansprüche, **dadurch gekennzeichnet, dass** das Abtransportieren der Zuschnitte durch Entfernen der fertigen Zuschnitte aus der Materialbahn erfolgt, wobei die Entfernung der fertigen Zuschnitte bevorzugt mittels Robotersysteme oder Kugel-Ketten-Förderern erfolgt, besonders bevorzugt mittels Robotersystemen, die ggf. mit der Steuerungseinheit verbunden sind.

14. Verfahren gemäß einem der vorhergehenden Patentansprüche, **dadurch gekennzeichnet, dass** die Abfallentfernung im Verfahren erfolgt und bei der Abfallentfernung mindestens einer der folgenden Verfahrensschritte abläuft:
- Einbringen der Materialbahn in einen Abfallentfernungsbereich, der unterhalb der Materialbahn und im Einflussbereich aller Abfallentfernungselemente keinerlei Bahnführungselemente oder Bahnförderelemente aufweist,
- Behandeln der geschnittenen Materialbahn mit Abfallentfernungselementen, die oberhalb der Materialbahn installiert sind und von oben auf die Materialbahn einwirken, um den Abfall im jeweiligen Einflussbereich der Abfallentfernungselemente aus der Materialbahn zu entfernen.

15. Verfahren gemäß Patentanspruch 14, **dadurch gekennzeichnet, dass** die Abfallentfernungselemente flächig wirkende Abfallentfernungselemente sind, bevorzugt Druckluftbalken, Bürsten oder Vakuumgurte, oder lokal wirkende Abfallentfernungselemente, bevorzugt Luftdüsen oder bewegliche Stößel, oder eine Kombination verschiedener Abfallentfernungselemente.

16. Vorrichtung zur Herstellung von Zuschnitten aus Wellpappe umfassend
- eine Zuführungsvorrichtung zur Zuführung einer Materialbahn aus Wellpappe, wobei die Zuführungsvorrichtung eine Wellpappenerzeugungsanlage zur Erzeugung einer Wellpappenbahn ist,
- eine ersten Schnittstation mit mindestens einem formungebundenen, variablen Schneidwerkzeug, wobei das formungebundene, variable Schneidwerkzeug ein Laser oder ein Plasmaschneider ist und die Vorrichtung bevorzugt kein formgebundenes Stanzwerkzeug aufweist,
- mindestens eine Transportvorrichtung mit der die Materialbahn in der Vorrichtung transportiert wird,
- mindestens eine Abfallentsorgungseinrichtung, die keine Bahnführungselemente aufweist und
- mindestens eine Planungseinheit, die die Lage der Zuschnitte in der Materialbahn plant, wobei das zu erwartende Schrumpfungsverhalten der noch nicht dimensionsstabilen Wellpappenbahn durch das formungebundene Schneidwerkzeug berücksichtigt und durch das Skalieren des geplanten Zuschnitts im Voraus berechnet und angepasst werden kann.

17. Vorrichtung gemäß Patentanspruch 16, **dadurch gekennzeichnet, dass** die Schnittstation weiterhin mindestens eine Sensoreinheit und mindestens eine Steuerungseinheit aufweist, die mit der Sensoreinheit verbunden ist, wobei die Sensoreinheit eine Sensor zur Erfassung der Position von Synchronisierungsmarkierungen aufweist und die Steuerungseinheit eine Steuerung des Schneidwerkzeugs ist.

18. Vorrichtung gemäß einem der Patentansprüche 16 oder 17, **dadurch gekennzeichnet, dass** in der Schnittstation mehrere formungebundene, variable Schneidwerkzeuge angeordnet sind, bevorzugt hintereinander in Laufrichtung der Materialbahn und/oder paarweise nebeneinander.

19. Vorrichtung gemäß einem der Patentansprüche 16 bis 18, **dadurch gekennzeichnet** die Vorrichtung eine erste Schnittstation, eine erste Abfallentfernungsstation, eine zweite Schnittstation und mindestens eine Abtransporteinheit für die Zuschnitte aufweist.

20. Vorrichtung gemäß einem der Patentansprüche 16 bis 19, **dadurch gekennzeichnet, dass** die Abtransporteinheit ein Robotersystem oder ein Kugel-Ketten-Förderer ist, besonders bevorzugt ein Robotersystem, das ggf. mit der Steuerungseinheit verbunden ist.

21. Vorrichtung gemäß einem der Patentansprüche 16 bis 20, **dadurch gekennzeichnet, dass** die Abfallentfernungsstation flächig wirkende Abfallentfernungselemente sind, bevorzugt Druckluftbalken, Bürsten oder Vakuumgurte, oder lokal wirkende Abfallentfernungselemente, bevorzugt Luftdüsen oder bewegliche Stößel, oder eine Kombination verschiedener Abfallentfernungselemente.

## Claims

1. A method for manufacturing blanks from cardboard comprising the steps:
- guiding a material web, in the operating area of a variable cutting tool that is not form limited, and
- cutting the material web using at least one variable cutting tool that is not form limited, wherein cutting lines are introduced into the material web using the cutting tool, said cutting lines generating the contour of a blank, a waste piece, or parts of the contour of a blank or waste piece in the material web,
**characterized in that** the material web is a corrugated paper cardboard web which is supplied directly from a corrugated cardboard generating system, and a planning unit plans the position of the blanks in the material web in a planning step, wherein the expected shrinkage behavior of the corrugated cardboard, which is not yet dimensionally stable, can be taken into consideration by the cutting tool that is not form limited, and can be calculated and adapted in advance by scaling the planned blank.

2. The method according to Claim 1, **characterized in that** the variable cutting tool that is not form limited is a laser or a plasma cutter and the method is preferably carried out without a form-limited punching tool.

3. The method according to Claim 1 or 2, **characterized in that** the method additionally comprises the steps:
- applying synchronization markings onto the material web prior to the guiding to a cutting tool,
- detecting the synchronization markings using at least one sensor unit,
- transmitting the data regarding the position of the synchronization markings from the sensor unit to a control unit,
- controlling the cutting tool by the control unit based on the transmitted data, so that the cutting lines are applied by the cutting tool depending on the position of the synchronization markings.

4. The method according to one of the preceding claims, **characterized in that** the cutting of the material web is carried out using a plurality of variable cutting tools that are not form limited, which are preferably arranged one behind the other in the movement direction of the material web and/or next to one another.

5. The method according to one of the preceding claims, **characterized in that** in another method step:
- the removal of waste pieces from the material web and the transporting of the blanks is carried out, or
- the transporting of the blanks and the removal of waste pieces from the material web is carried out.

6. The method according to one of the preceding claims, **characterized in that** the material web is a continuous corrugated cardboard web.

7. The method according to one of the preceding claims, **characterized in that** the method additionally comprises the steps:
- guiding the material web with cutting lines to at least one waste removal element,
- removal of waste pieces from the material web using the waste removal element.

8. The method according to Claim 7, **characterized in that**, after the removal of the waste pieces, the material web is transported to at least on additional variable cutting tool that is not form limited and is cut using the at least one variable cutting tool that is not form limited, wherein second cutting lines, which cut out a blank or parts of a blank, are introduced into the material web using the cutting tool.

9. The method according to Claim 8, **characterized in that** the second cutting lines are the separating lines between adjacent blanks.

10. The method according to one of the preceding claims, **characterized in that** the material web is printed, particularly in a digital printing method.

11. The method according to one of the preceding claims, **characterized in that** the material web is provided with longitudinal grooves or transverse grooves using one or more grooving tools, wherein the grooving tools may be arranged upstream or downstream of the first cutting tool, and/or that the material web is provided with embossments using one or more embossing tools, wherein the embossing tools may be arranged upstream or downstream of the at least one first cutting tool.

12. The method according to one of the preceding claims, **characterized in that**
- first cutting lines, which cut out the contour of a waste piece and/or parts of the contour of a blank from the material web, are introduced into the material web using at least one first cutting tool,
- the material web with the first cutting lines is transported to at least one waste removal element,
- the one or more waste removal elements remove all waste pieces from the material web,
- the material web without waste pieces is transported to a second cutting tool,
- second cutting lines, which cut out the contour of a blank or parts of the contour of a blank, are introduced into the material web using the second cutting tools,
- the finished, waste-free blank is transported, and
- optionally, the remaining material web without blanks is cut into strips by transverse cutters or is sliced by means of a shredder.

13. The method according to one of the preceding claims, **characterized in that** the transport of the blanks is carried out by removing the finished blanks from the material web, wherein the removal of the finished blanks is preferably carried out by means of robotic systems or ball-chain conveyors, particularly preferably by means of robotic systems which optionally are connected to the control unit.

14. The method according to one of the preceding claims, **characterized in that** the waste removal is carried out in the method and at least one of the following method steps takes place at the waste removal:
- introduction of the material web into a waste removal region, which has no web guiding elements or web conveying elements underneath the material web and in the area of influence of all waste removal elements,
- treating the cut material web using waste removal elements that are installed above the material web and act on the material web from above in order to remove the waste from the material web in the respective area of influence of the waste removal elements.

15. The method according to Claim 14, **characterized in that** the waste removal elements are waste removal elements acting over an area, preferably compressed air bars, brushes, or vacuum belts, or waste removal elements acting locally, preferably air jets or movable pushers, or a combination of different waste removal elements.

16. A device for manufacturing blanks from cardboard comprising:
- a supply device for supplying a material web made of corrugated cardboard, wherein the supply device is a corrugated cardboard generating system for generating a corrugated cardboard web,
- a first cutting station with at least one variable cutting tool that is not form limited, wherein the variable cutting tool that is not form limited is a laser or a plasma cutter and the device preferably does not have a form-limited punching tool,
- at least one transport device with which the material web is transported in the device,
- at least one waste removal device which has no web guiding elements, and
- at least one planning unit, which plans the position of the blanks in the material web, wherein the expected shrinkage behavior of the corrugated cardboard, which is not yet dimensionally stable, can be taken into consideration by the cutting tool that is not form limited, and can be calculated and adapted in advance by scaling the planned blank.

17. The device according to Claim 16, **characterized in that** the cutting station additionally has at least one sensor unit and at least one control unit which is connected to the sensor unit, wherein the sensor unit has a sensor for detecting the position of synchronization markings and the control unit is a controller of the cutting tool.

18. The device according to one of Claims 16 or 17, **characterized in that** a plurality of variable cutting tools that are not form limited are arranged in the cutting station, preferably behind one another in the movement direction of the material web and/or next to one another in pairs.

19. The device according to one of Claims 16 to 18, **characterized in that** the device has a first cutting station, a first waste removal station, a second cutting station and at least one transport unit for the blanks.

20. The device according to one of Claims 16 to 19, **characterized in that** the transport unit is a robotic systems or ball-chain conveyor, particularly preferably a robotic systems which is optionally connected to the control unit.

21. The device according to one of Claims 16 to 20, **characterized in that** the waste removal station has waste removal elements acting over an area, preferably compressed air bars, brushes, or vacuum belts, or waste removal elements acting locally, preferably air jets or movable pushers, or a combination of different waste removal elements.

## Revendications

1. Procédé de fabrication de découpes de carton ondulé comprenant les opérations suivantes :
- Amenage d'une bande de matériau dans la zone d'action d'un outil de coupe variable non lié à une forme, et
- Découpe de la bande de matériau au moyen d'au moins un outil de coupe non lié à une forme variable, des lignes de coupe étant ménagées dans la bande de matériau au moyen de l'outil de coupe, lesquelles lignes de coupe déterminent le contour d'une découpe, d'une chute ou des parties de contour d'une découpe ou d'une chute dans la bande de matériau,
**caractérisé en ce que** la bande de matériau est une bande de carton ondulé qui est alimentée directement à partir d'une installation de production de carton ondulé, un ensemble de programmation programme la position des découpes dans la bande de matériau au cours d'une étape de programmation, le comportement de rétrécissement, prévisible, de la bande de carton ondulé qui n'est pas encore stable dimensionnellement par l'outil de coupe non lié à une forme, est pris en compte et peut être calculé et adapté à l'avance au moyen d'une mise à l'échelle de la découpe programmée.

2. Procédé selon la revendication 1 **caractérisé en ce que** l'outil de coupe variable non lié à une forme est un outil de coupe laser ou un outil de coupe plasma et **en ce que** le procédé est exécuté de préférence sans outil de découpe lié à une forme.

3. Procédé selon la revendication 1 ou 2 **caractérisé en ce que** le procédé comprend en outre les opérations consistant à :
- Apposer des marques de synchronisation sur la bande de matériau avant l'aménage à un outil de coupe,
- Saisir les marques de synchronisation au moyen d'au moins un ensemble capteur.
- Reporter par l'ensemble capteur, les données de position des marques de synchronisation dans un ensemble de commande.
- Commander l'outil de coupe au moyen de l'ensemble de commande sur la base des données reportées, de telle manière que les lignes de coupe sont exécutées par l'outil de coupe en fonction de la position des marques de synchronisation.

4. Procédé selon l'une des revendications qui précèdent **caractérisé en ce que** la découpe de la bande de matériau est effectuée au moyen de plusieurs outils de coupe variables non liés à une forme, lesquels outils sont disposés de préférence l'un à la suite de l'autre et/ou l'un à côté de l'autre dans la direction de déplacement de la bande de matériau.

5. Procédé selon l'une des revendications qui précèdent **caractérisé en ce que** dans une étape ultérieure du procédé sont effectués :
- le détachement des chutes de la bande de matériau et l'évacuation des découpes, ou
- l'évacuation des découpes et le détachement des chutes de la bande de matériau.

6. Procédé selon une des revendications qui précèdent **caractérisé en ce que** la bande de matériau est une bande de carton ondulé sans fin.

7. Procédé selon l'une des revendications qui précèdent **caractérisé en ce que** le procédé comprend en outre les opérations suivantes :
- Amenage de la bande de matériau comportant des lignes de coupe jusqu'à au moins un élément de détachement de chutes.
- Détachement des chutes hors de la bande de matériau au moyen de l'élément de détachement de chutes.

8. Procédé selon la revendication 7 **caractérisé en ce que** la bande de matériau est, après le détachement des chutes, transportée jusqu'à au moins un autre outil de coupe variable non lié à une forme, et **en ce que** la bande de matériau est découpée au moyen d'un outil de coupe variable non lié à une forme, des deuxièmes lignes de coupe étant ménagées dans la bande de matériau au moyen de l'outil de coupe, lesquelles deuxièmes lignes de coupe découpent une découpe ou des parties d'une découpe.

9. Procédé selon la revendication 8 **caractérisé en ce que** les deuxièmes lignes de coupe sont des lignes de séparation entre des découpes voisines.

10. Procédé selon l'une des revendications qui précèdent **caractérisé en ce que** la bande de matériau est imprimée, en particulier selon un procédé d'impression numérique.

11. Procédé selon l'une des revendications qui précèdent **caractérisé en ce que** la bande de matériau est dotée d'un ou de plusieurs outils de rainurage comportant des moyens de rainurage longitudinal ou des moyens de rainurage transversal, les outils de rainurage pouvant être disposés avant ou après le premier outil de coupe et/ou la bande de matériau étant munie d'estampages au moyen d'un ou de plusieurs outils d'estampage, les outils d'estampage pouvant être disposés avant ou après le premier outil de coupe au moins unique.

12. Procédé selon l'une des revendications qui précèdent **caractérisé en ce que**
- des premières lignes de coupe sont ménagées dans la bande de matériau au moyen d'un premier outil de coupe, lesquelles lignes de coupe découpent le contour d'une chute et/ou des parties du contour d'une découpe dans la bande de matériau,
- la bande de matériau comportant les premières lignes de coupe est transportée jusqu'à un élément de détachement de chutes au moins unique,
- l'élément de détachement de chutes, ou les plusieurs éléments de détachement de chute, détachent toutes les chutes hors de la bande de matériau,
- la bande de matériau exempte de chutes est transportée jusqu'à un deuxième outil de coupe,
- des deuxièmes lignes de coupe sont ménagées dans la bande de matériau au moyen des deuxièmes outils de coupe, lesquelles lignes de coupe découpent le contour d'une découpe ou des parties du contour d'une découpe dans la bande de matériau,
- la découpe terminée exempte de chutes est évacuée et
- le cas échéant la bande de matériau qui subsiste sans découpes est coupée en bandes au moyen d'un outil de coupe transversal ou déchiquetée au moyen d'un shredder.

13. Procédé selon l'une des revendications qui précèdent **caractérisé en ce que** l'évacuation des découpes s'effectue en détachant les découpes terminées hors de la bande de matériau, le détachement des découpes terminées étant effectuée de préférence au moyen de systèmes de robots ou de convoyeurs à chaîne à billes, et de façon particulièrement préférée au moyen de systèmes de robots qui le cas échéant sont reliés à l'ensemble de commande.

14. Procédé selon l'une des revendications qui précèdent **caractérisé en ce que** le détachement des chutes est effectué au cours du processus et, **en ce que**, lors du détachement des chutes, au moins une des opérations suivantes du procédé se déroule :
- Amenage de la bande de matériau dans une zone de détachement de chutes qui ne présente, sous la bande de matériau et dans la zone d'influence de tous les éléments de détachement de chutes, aucune sorte d'éléments de guidage de la bande ou d'éléments de déplacement de la bande,
- traitement de la bande de matériau découpée au moyen d'éléments de détachement de chutes qui sont installés au-dessus de la bande de matériau et qui agissent depuis le haut sur la bande de matériau pour écarter les chutes de la bande de matériau dans chaque zone d'influence des éléments du détachement de chutes.

15. Procédé selon la revendication 14 **caractérisé en ce que** les éléments de détachement de chutes sont des éléments de détachement de chutes agissant en surface, de préférence de poutres à air comprimé, des brosses ou des ceintures à vide, ou des éléments de détachement de chutes agissant localement, de préférence des buses à air ou des poussoirs mobiles, ou une combinaison de différents éléments de détachement de chutes.

16. Dispositif de fabrication de découpes de carton ondulé comprenant :
- un dispositif d'amenage destiné à l'amenage d'une bande de matériau en carton ondulé, le dispositif d'amenage étant un dispositif d'amenage d'une installation de fabrication de carton ondulé destinée à la fabrication d'une bande de carton ondulé ;
- un premier poste de coupe comportant au moins un outil de coupe variable non lié à une forme étant un dispositif de coupe du type laser ou du type plasma et le dispositif ne présentant de préférence pas d'outil de découpe lié à une forme ;
- au moins un dispositif de transport au moyen duquel la bande de matériau est transportée dans le dispositif ;
- au moins un dispositif de détachement de chutes qui ne présente pas d'éléments de guidage de bande et
- au moins un ensemble de programmation qui programme la position des découpes dans la bande de matériau, le comportement de rétrécissement, prévisible, de la bande de carton ondulé pas encore stable dimensionnellement étant pris en compte par l'outil de coupe non lié à une forme et pouvant être calculé et adapté à l'avance par la mise à l'échelle de la découpe programmée.

17. Dispositif selon la revendication 16 **caractérisé en ce que** le poste de coupe présente en outre au moins un ensemble capteur et au moins un ensemble de commande qui est relié à l'ensemble capteur, l'ensemble capteur présentant un capteur destiné à saisir la position de marques de synchronisation et l'ensemble de commande étant une commande de l'outil de coupe.

18. Dispositif selon une des revendications 16 ou 17 **caractérisé en ce que** dans le poste de coupe sont disposés plusieurs outils de coupe variables non liés à une forme, de préférence les uns à la suite des autres dans la direction de déplacement de la bande de matériau et/ou par paires les uns à côté des autres.

19. Dispositif selon une des revendication 16 à 18 **caractérisé en ce que** le dispositif présente un premier poste de coupe, une premier poste de détachement de chutes, un deuxième poste de coupe et au moins un ensemble d'évacuation de chutes.

20. Dispositif selon une des revendications 16 à 19 **caractérisé en ce que** l'ensemble d'évacuation est un système de robots ou un convoyeur à chaîne à bille, de façon particulièrement préférée un système de robots qui est le cas échéant relié à l'ensemble de commande.

21. Dispositif selon une des revendications 16 à 20 **caractérisé en ce que** le poste de détachement de chutes comporte des éléments de détachement de chutes agissant en surface, de préférence des poutres à air comprimé, des brosses ou des ceintures à vide, ou des éléments de détachement de chutes agissant localement, de préférence des buses à air ou des poussoirs mobiles, ou une combinaison de différents éléments de détachement de chutes.
